# FASCICULE DE BREVET EUROPEEN

(11) **EP 3 782 139 B1**
(45) Date de publication et mention de la délivrance du brevet: **04.05.2022**
(21) Numéro de dépôt: 19713109.7
(22) Date de dépôt: 06.03.2019
(51) Int. Cl.: G08B 17/107

(54) **DÉTECTEUR OPTIQUE DE FUMÉE À RAYONNEMENT DIFFUSÉ**
OPTISCHER RAUCHDETEKTOR MIT STREUSTRAHLUNG
OPTICAL SMOKE DETECTOR WITH SCATTERED RADIATION

(30) Priorité: 19.04.2018 FR 1853469
(43) Date de publication de la demande: 24.02.2021
(73) Titulaire: Wemaintain, 92200 Neuilly Sur Seine (FR)
(72) Inventeur: COMETS, Olivier, 75010 Paris (FR)
(74) Mandataire: Ipsilon
(86) Numéro de dépôt international: PCT/FR2019/050500
(87) Numéro de publication internationale: WO 2019/202222

(56) Documents cités:
- DE-A1- 2 828 190
- US-A- 5 719 557
- US-B2- 9 098 988

## Description

La présente invention concerne un détecteur optique de fumée fonctionnant selon le principe du rayonnement diffusé. Elle s'applique en particulier à la détection de fumée dans tout bâtiment public ou privé, résidentiel, industriel ou commercial.

De nombreux détecteurs de fumée destinés à être placés dans des endroits stratégiques de bâtiments ont déjà été proposés, de façon à alerter les occupants au plus tôt d'un début de combustion ou d'incendie.

Parmi les détecteurs de fumée proposés, on connaît notamment le détecteur optique de fumée à rayonnement diffusé, utilisant l'effet Tyndall (phénomène de diffusion d'une lumière incidente sur des particules de matières). Dans un tel détecteur optique, la détection des particules de fumée est réalisée par la mesure d'un rayonnement diffusé sur ces particules de fumées. Plus précisément, une chambre de mesure interne au détecteur optique de fumée à rayonnement diffusé comprend un volume de mesure accessible aux particules de fumée, volume sur lequel on dirige le rayonnement d'un émetteur de rayonnement (par exemple d'une diode électroluminescente). Un récepteur de lumière (par exemple une photodiode, un photoconducteur ou un photo condensateur), sensible au rayonnement émis par l'émetteur de rayonnement, est également agencé dans le détecteur pour recevoir le rayonnement diffusé par des particules de fumée présentes dans la chambre de mesure. Lorsqu'il n'y a pas de fumée dans la chambre de mesure, le détecteur optique est configuré pour que le récepteur de lumière ne reçoive qu'une quantité minimale, si possible nulle, de rayonnement. A l'inverse, lorsque de la fumée pénètre dans la chambre de mesure, les particules de fumée vont diffuser le rayonnement provenant de l'émetteur de rayonnement, et illuminer ainsi le récepteur de rayonnement. Un signal reçu au niveau du récepteur de rayonnement, dont l'amplitude reste supérieure à un seuil prédéfini de sensibilité pendant une durée minimum prédéfinie, provoque le passage du détecteur dans un état d'alarme, puis la remontée de cet état vers une centrale et/ou la génération d'une alarme sonore et/ou visuelle au niveau du détecteur pour alerter d'un début de combustion ou d'incendie.

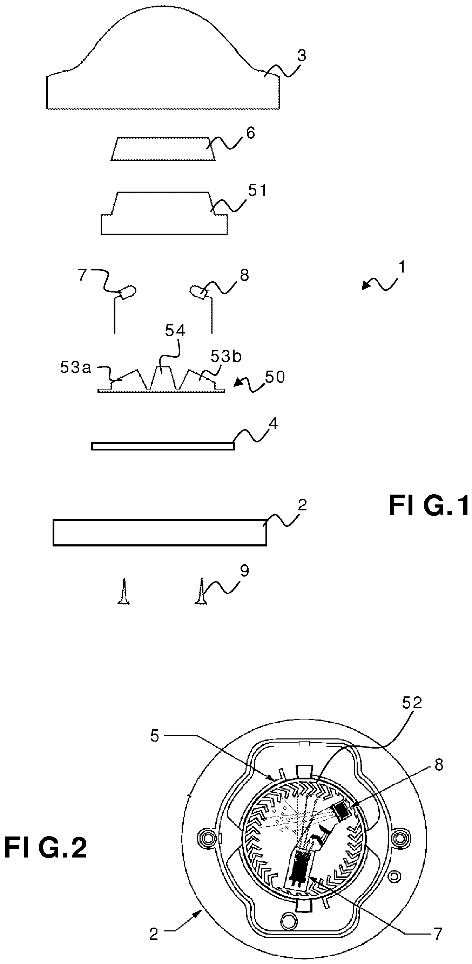

La figure 1 illustre schématiquement en perspective éclatée les éléments constitutifs d'un détecteur optique de fumée à rayonnement diffusé standard, et la figure 2 illustre une coupe transversale d'un exemple d'agencement connu d'éléments optiques dans une chambre de mesure standard.

Un tel détecteur optique 1 comprend classiquement un boîtier formé par l'assemblage d'une platine 2, et d'une coiffe 3, définissant l'enveloppe physique du détecteur. Ce détecteur optique 1 est généralement accroché, par la face inférieure de la platine, à une autre pièce fixée au plafond, appelée plafonnier et non représentée. La coiffe 3 constitue alors la partie visible du détecteur 1 lorsque ce dernier est en place. A l'intérieur du boîtier, une carte 4 de circuit imprimé est reçue dans la platine 2, et surmontée d'une chambre 5 de mesure (voir figure 2) constituée classiquement de deux parties : une première partie dite partie basse ou inférieure 50, placée directement sur la carte 4 de circuit imprimée, et une deuxième partie dite partie haute ou supérieure 51, coopérant avec la partie basse 50 pour délimiter un espace interne accessible aux particules de fumées grâce à des ouvertures 52 pratiquées dans la paroi latérale de la partie haute 51 (voir figure 2). Il convient de noter que la notion de partie basse ou inférieure, d'une part, et de partie haute ou supérieure d'autre part, doivent être comprises en relation avec l'orientation du dispositif 1 tel que représenté sur la figure 1. Bien entendu, lorsque le dispositif 1 est fixé à un plafond, les parties haute et basse se retrouvent inversées par rapport à la verticale d'un repère terrestre. Un dispositif 6 de filtrage, par exemple une grille métallique ou un filet en nylon cylindrique à mailles fines, vient avantageusement autour de la paroi latérale de la partie haute 51 en regard des ouvertures 52, pour éviter notamment que des insectes ne pénètrent dans la chambre 5 de mesure. Un émetteur 7 de rayonnement et un récepteur 8 de rayonnement sensible au rayonnement émis par l'émetteur 7, sont montés sur la carte 4 de circuit imprimé, dans l'exemple, au travers de la partie basse 50. Les différents composants cidessus sont assemblés par l'intermédiaire de vis 9 d'assemblage. Dans certains cas, ces éléments sont maintenus ensemble par des clips.

A l'intérieur de la chambre 5 de mesure, le volume de mesure du détecteur de fumée correspond au volume d'intersection entre le faisceau de rayonnement (ou cône d'émission) de l'émetteur 7 et l'angle solide de réception (ou cône de réception) du récepteur 8 de rayonnement. Le positionnement de l'émetteur 7 et du récepteur 8 doit en conséquence être très précis de façon à optimiser ce volume de mesure. Afin d'éviter tout rayonnement direct de l'émetteur 7 vers le récepteur 8, l'émetteur 7 et le récepteur 8 sont montés traditionnellement de manière à former un angle, généralement entre 120 et 130 degrés, comme visible sur la figure 2. Dans le mode de réalisation des figures 1 et 2, l'émetteur 7 et le récepteur 8 sont des composants traversant montés sur la carte 4 de circuit imprimé au travers de la partie basse 50, de sorte que leur partie active est placée à l'intérieur de la chambre 5 de mesure. L'émetteur 7 et le récepteur 8 sont en outre positionnés avec un certain angle par rapport à la carte 4 de circuit imprimé. Cet angle est de 35 degrés environ dans certains modes de réalisation. Pour garantir ce positionnement, des formes de guidage 53a, 53b formant un support pour les parties actives de l'émetteur 7 et du récepteur 8 sont généralement prévues sur la surface supérieure de la partie inférieure 50. Des barrières physiques, comme le muret 54, sont également classiquement prévues sur la surface supérieure de la partie inférieure 50 pour supprimer tout rayonnement direct.

Pour les détecteurs de fumée tels que celui représenté sur les figures 1 et 2, la partie basse 50 et la partie haute 51 de la chambre de mesure sont généralement réalisées en deux pièces injectées, de préférence en plastique. Les pièces sont en outre de couleur noire de façon à garantir la meilleure absorption du rayonnement émis par l'émetteur 7 en l'absence de particules de fumée, quelle que soit la longueur d'onde de rayonnement utilisée. La coiffe 3 est quant à elle une pièce réalisée également par injection plastique. Le coloris utilisé pour la coiffe 3 peut être néanmoins quelconque, généralement blanc pour être assorti aux plafonds.

Le document US 9 098 988 décrit le choix d'une rugosité d'une surface intérieure de la chambre de mesure afin de générer une réflexion diffuse du rayonnement émis par l'émetteur.

La constitution des détecteurs optiques précédents requiert ainsi la fabrication et l'assemblage manuel relativement complexe de nombreuses pièces. Il est notamment nécessaire de faire passer les pattes de connexion électrique de l'émetteur et du récepteur au travers de la partie basse 51 pour les souder sur la carte 4 de circuit imprimé, puis de s'assurer que les parties actives soient correctement positionnées sur les formes de guidage 53a, 53b. Il en résulte un produit coûteux.

Des améliorations au détecteur optique de fumée précédemment décrit ont été proposées pour d'une part, faciliter le montage des composants optiques sur la carte de circuit imprimé, et d'autre part, garantir un positionnement angulaire précis du faisceau de rayonnement de l'émetteur et de l'angle solide du récepteur. Ces améliorations, décrites par exemple dans les documents US 8, 441, 368 et WO 2012/035259, reposent sur l'utilisation d'un émetteur et d'un récepteur associé montés directement en surface sur une carte de circuit imprimé, à une distance suffisante l'un de l'autre (de l'ordre de 5 centimètres). Le cône d'émission de l'émetteur et le cône de réception du récepteur s'étendent ainsi parallèlement l'un par rapport à l'autre, et perpendiculairement par rapport à la carte de circuit imprimé, sans zone d'intersection. Le volume de mesure à l'intérieur de la chambre de mesure est obtenu par l'utilisation de guides d'ondes placés en regard des parties actives de l'émetteur et du récepteur qui sont situées sous la partie inférieure de la chambre de mesure. Les autres pièces présentées sur la figure 1 sont inchangées. En particulier, la chambre de mesure est réalisée sous la forme de deux pièces moulées par injection plastique, toujours de couleur noire pour garantir l'absorption des faisceaux rayonnés en l'absence de particules de fumée. Ces améliorations permettent un placement très précis et automatisé des composants sur la carte (technique du Composant Monté en Surface ou CMS), simplifient quelque peu le montage et rendent les performances d'un détecteur à l'autre plus constantes. Il reste néanmoins nécessaire de prévoir, comme dans le cas de la figure 1, la fabrication et l'assemblage d'une carte, d'une chambre de mesure avec ses parties haute et basse, de guides d'ondes optiques pour réorienter le faisceau rayonné par l'émetteur et l'angle solide du récepteur selon un angle entre 120 et 130 degrés, d'un dispositif de filtrage, d'une coiffe et d'une platine support.

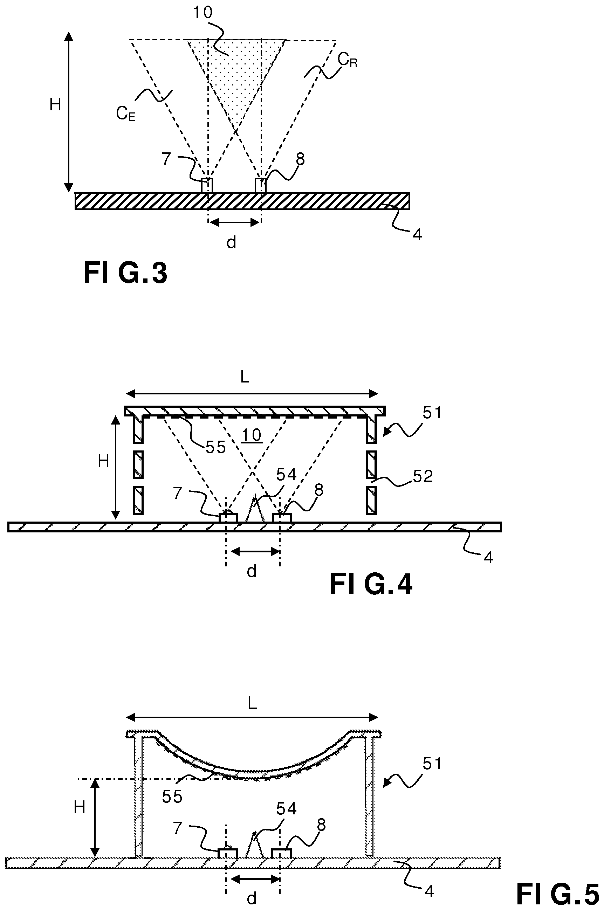

Plus récemment, comme représenté schématiquement sur la figure 3, des modules électroniques ont été développés proposant une carte 4 de circuit imprimé sur laquelle l'émetteur 7 de rayonnement et le récepteur 8 associé sont montés à une distance d très faible l'un de l'autre (typiquement entre 1,7 et 2 millimètres). Un module électronique de ce type est par exemple commercialisé par Silicon Laboratories sous la référence produit Si114x, par Analog Devices sous la référence produit ADPD145BI, ou par Maxim Integrated sous la référence produit MAX30105. En rapprochant drastiquement les composants optiques, on peut s'affranchir du besoin des guides optiques puisqu'il existe naturellement une zone 10 d'intersection entre le cône d'émission C_{E} et le cône de réception C_{R}, cette zone 10 d'intersection formant le volume de mesure du détecteur. Ces modules ont été développés et prévus pour fonctionner directement dans l'air libre, le volume de mesure étant alors un volume de mesure extérieur au détecteur de fumée et permettant de s'affranchir de la chambre de mesure interne comme expliqué par exemple dans le document US 9, 142, 112.

Ces modules électroniques pourraient être utilisés également avec des chambres de mesure classiques internes au détecteur optique de fumée, similaires à celle décrite en figure 1, c'est-à-dire formées par une partie basse 50 et une partie haute 51 de couleur noire pour garantir l'absorption du rayonnement émis en l'absence de particules de fumée à l'intérieur de la chambre et éviter ainsi que le récepteur ne se retrouve aveuglé.

La présente invention s'inscrit dans les démarches récentes d'améliorations de détecteurs optiques de fumée à rayonnement diffusé intégrant une chambre de mesure interne, avec le souci notamment de réduire le nombre de pièces à assembler par rapport à la configuration de la figure 1, et/ou de réduire l'encombrement.

Plus précisément, la présente invention a pour objet un détecteur optique de fumée à rayonnement diffusé comprenant un boîtier renfermant un volume de mesure accessible aux particules de fumée dans une chambre de mesure comportant une partie haute, ledit volume de mesure étant défini par un volume d'intersection entre un cône d'émission d'au moins un premier émetteur de rayonnement à une première longueur d'onde d'émission prédéfinie, et un cône de réception d'un récepteur de rayonnement apte à recevoir des rayonnements diffusés sur des particules de fumée, **caractérisé en ce que** ledit au moins un premier émetteur de rayonnement et le récepteur de rayonnement sont montés dans la chambre de mesure, en surface d'une plaque de circuit imprimé placée sous la partie haute **et en ce que** toute portion de surface interne de la partie haute de la chambre de mesure faisant directement obstacle au rayonnement émis dans le cône d'émission a une rugosité apte à générer une réflexion diffuse de ce rayonnement.

Grâce à ces dispositions, il est possible de réaliser la pièce constituant la partie haute de la chambre de mesure dans une couleur quelconque, contrairement aux détecteurs de l'art antérieur décrits ci-avant pour lesquels la chambre de mesure ne peut être que de couleur noire.

Dans un mode préféré de réalisation, le boîtier du détecteur est formé par assemblage d'une platine et d'une coiffe, et la partie haute de la chambre de mesure est injectée en une seule pièce de couleur quelconque avec la coiffe.

Dans un mode de réalisation possible, la rugosité est définie par une rugosité moyenne arithmétique Ra supérieure ou égale au quart de la première longueur d'onde d'émission, avantageusement inférieure ou égale à cinquante fois la première longueur d'onde d'émission, et de préférence comprise entre la moitié et dix fois la première longueur d'onde d'émission.

Selon un mode possible de réalisation, le volume de mesure comporte en outre un volume d'intersection entre un cône d'émission d'un rayonnement à une deuxième longueur d'onde d'émission distincte de la première longueur d'onde d'émission, et d'un cône de réception du rayonnement diffusé sur des particules de fumée à cette deuxième longueur d'onde. Cette particularité permet avantageusement au détecteur de pouvoir discriminer les types de particules de fumée.

La première longueur d'onde d'émission est par exemple sensiblement égale à 450 nanomètres, correspondant à une émission de couleur bleue, et la deuxième longueur d'onde d'émission est par exemple sensiblement égale à 950 nanomètres, correspondant à une émission en infra-rouge. Par « sensiblement » en ce qui concerne les longueurs d'ondes, on entend entre 450 et 500 nanomètres pour une émission de couleur bleue, et entre 800 et 1050 nanomètres pour une émission en infrarouge.

Dans ce cas, la rugosité de toute portion de surface interne de la partie haute de la chambre de mesure faisant directement obstacle au rayonnement émis à la première longueur d'onde et/ou à la deuxième longueur d'onde est définie par une rugosité moyenne arithmétique Ra de préférence sensiblement égale à 0,8.

Dans un mode de réalisation possible conforme à l'invention, le premier émetteur de rayonnement et le récepteur de rayonnement sont avantageusement montés en surface d'une plaque de circuit imprimé placée sous la chambre de mesure de manière à ce que le cône d'émission et le cône de réception s'étendent selon deux directions d'orientation sensiblement parallèles, les deux directions d'orientation étant sensiblement orthogonales à la plaque de circuit imprimé. Par « sensiblement orthogonales », on entend que les deux directions font chacune un angle de 90° avec le plan de la plaque de circuit imprimé, avec une tolérance de plus ou moins 5°.

Le premier émetteur de rayonnement et le récepteur de rayonnement sont alors de préférence positionnés sur la carte de circuit imprimé de sorte que lesdites deux directions d'orientation sensiblement parallèles soient séparées d'une distance d inférieure à 2,5 millimètres.

Selon une réalisation particulièrement avantageuse de l'invention en termes d'encombrement, la partie haute de la chambre de mesure a une surface interne supérieure séparée de la carte de circuit imprimé d'une distance minimale H sensiblement égale à dix fois la distance d.

L'invention sera mieux comprise au vu de la description détaillée suivante, faite en référence aux figures annexées, dans lesquelles :
- la figure 1, déjà décrite ci-avant, illustre schématiquement, en vue éclatée, un exemple de détecteur optique de fumée à rayonnement diffusée selon l'art antérieur ;
- la figure 2, déjà décrite ci-avant, est une coupe transversale d'un exemple d'agencement connu d'éléments optiques dans une chambre de mesure standard ;
- la figure 3, déjà décrite ci-avant, illustre schématiquement un autre exemple connu d'agencement d'éléments optiques pour un détecteur de fumée sans chambre de mesure interne ;

- la figure 4 représente schématiquement une coupe d'une chambre de mesure agencée sur une carte de circuit imprimé pour un détecteur optique de fumée selon un mode de réalisation possible conforme à l'invention ;
- la figure 5 représente schématiquement une coupe d'une chambre de mesure agencée sur une carte de circuit imprimé pour un détecteur optique de fumée selon une variante de réalisation possible conforme à l'invention ;
- la figure 6 est une perspective d'une pièce unique formant chambre de mesure et coiffe externe pour un détecteur optique de fumée selon un mode de réalisation possible de l'invention.

Dans la suite, et à moins qu'il n'en soit disposé autrement, les éléments communs aux différentes figures portent les mêmes références.

En référence aux figures 4 et 5 qui représentent des modes de réalisation préférés mais nullement limitatifs de l'invention, le détecteur de fumée à rayonnement diffusé comprend un boîtier (non représenté) renfermant un volume 10 de mesure accessible aux particules de fumée dans une chambre de mesure comportant une partie haute 51. On rappelle que la notion de partie haute doit être comprise en relation avec l'orientation du dispositif tel que représenté sur les figures 4 et 5. Ainsi, une fois que le détecteur est fixé à un plafond, la partie haute se retrouve en bas. Comme expliqué ci-avant, le volume de mesure est défini par un volume d'intersection entre un cône d'émission d'un émetteur 7 fonctionnant à une première longueur d'onde d'émission prédéfinie, et un cône de réception d'un récepteur 8 de rayonnement apte à recevoir des rayonnements diffusés sur des particules de fumée. Les particules de fumées peuvent pénétrer dans la chambre de mesure par des ouvertures 52 pratiquées sur la paroi latérale de la partie haute 51.

Dans le cas non limitatif des figures 4 et 5, l'émetteur 7 et le récepteur 8 sont montés en surface d'une plaque 4 de circuit imprimé placée sous la partie haute 51 de chambre de mesure de manière à ce que le cône d'émission et le cône de réception s'étendent chacun selon un axe ou direction d'orientation sensiblement orthogonale à la plaque 4 de circuit imprimé. Cet agencement particulier de l'émetteur et du récepteur permet leur placement très précis et automatisé sur une plaque 4, avant tout processus d'assemblage des différentes pièces formant le détecteur.

L'émetteur 7 et le récepteur 8 de rayonnement sont de préférence montés sur la carte 4 de circuit imprimé de sorte qu'une distance d inférieure à 2,5 millimètres, de préférence sensiblement égale à 1,7 ou 2 millimètres, sépare les axes des cônes d'émission et de réception. Il est préférable que cette distance d soit du même ordre de grandeur que la distance séparant le sommet du cône de réception des particules de fumée présentes dans le volume de mesure. Les cônes d'émission et de réception présentent ainsi un volume naturel d'intersection, sans qu'il soit nécessaire de prévoir des guides d'ondes particuliers pour rediriger les rayons.

Conformément à l'invention, toute portion de surface interne de la partie haute 51 de la chambre de mesure qui fait directement obstacle au rayonnement émis par l'émetteur 7 dans le cône d'émission présente une rugosité générant une réflexion diffuse de ce rayonnement direct. Dans les exemples représentés sur les figures 4 et 5, compte-tenu des dimensions en largeur L et en hauteur H représentées, les portions de surface interne concernées sont situées particulièrement au niveau de la surface interne supérieure 55 de la partie haute 51. Ici, comme représenté sur les figures 4 et 5 en traits épais interrompus, toute la surface interne supérieure 55 est prévue pour avoir une rugosité suffisante pour diffuser le rayonnement reçu de l'émetteur 7 (bien qu'en théorie, seule la portion de cette surface interne supérieure 55 directement en regard avec le cône d'émission doive présenter cette rugosité). Dans d'autres modes de réalisation non représentés, pour lesquels on souhaiterait réduire la largeur L de la partie haute 51 de la chambre de mesure, d'autres zones de surface interne, en particulier sur la paroi latérale de la partie haute 51, pourraient également faire directement obstacle au rayonnement émis par l'émetteur 7, auquel cas ces portions devront être également prévues pour avoir une surface de granularité ou rugosité suffisante pour diffuser le rayonnement reçu de l'émetteur 7. Différentes formes peuvent être données à la surface interne supérieure 55 de la chambre de mesure, telles qu'une surface plane comme dans le cas de la figure 4, ou bien une surface concave comme dans le cas de la figure 5.

Grâce à cette particularité liée à la rugosité de surface, il devient à présent possible de réaliser la pièce constituant la partie haute 51 de la chambre de mesure dans un coloris quelconque, contrairement aux détecteurs de l'art antérieur décrits ci-avant pour lesquels la chambre de mesure ne peut être que de couleur noire. En effet, si l'on tente d'utiliser d'autres couleurs que le noir pour une chambre de mesure de type connue mise en regard de l'agencement optique représenté sur la figure 3, il faudrait prévoir une hauteur H minimum pour la partie haute de la chambre de mesure pour ne pas aveugler le récepteur en conditions normales (c'est-à-dire en l'absence de particules de fumée). Des tests ont montrés que, pour la plupart des couleurs autres que le noir, la hauteur H de la chambre de mesure de couleur absorbante noire doit être au minimum de l'ordre de 20 fois supérieure à la distance d séparant l'émetteur 7 du récepteur 8. Cette hauteur minimale peut même être de l'ordre de 10 centimètres si l'on cherche à utiliser une chambre de couleur blanc lisse, ce qui est bien entendu incompatible avec les contraintes d'encombrement.

De manière différente, en conférant, conformément à l'invention, au moins aux portions de surface interne de la partie haute 51 qui sont directement illuminées par l'émetteur 7, une rugosité suffisante, on peut obtenir que le rayonnement direct de l'émetteur diffusé par ces portions ne vienne pas aveugler le récepteur en conditions normales, et ce quel que soit le coloris utilisé dans la fabrication de la chambre de mesure (y compris le blanc). En effet, le rayonnement incident de l'émetteur 7 va être réfléchi sur cette surface dans une pluralité de directions, l'onde incidente subissant une multitude de réflexions selon différentes directions et repartant comme une multitude de petites ondes indépendantes. Des tests ont permis de montrer que même en utilisant un coloris blanc qui est le moins favorable, on peut descendre la hauteur minimale H de la chambre de mesure jusqu'à environ dix fois la distance d (soit environ 2 centimètres dans la géométrie des tests).

La rugosité d'une surface géométrique peut se définir selon les critères de rugosité classiques, par exemple ceux utilisés par la norme ISO 4287, reposant sur des écarts de hauteur d'un profil de surface mesurés par rapport à une référence supposée parfaite telle qu'une surface plane. Dans le cas présent, des tests menés avec différents coloris ont permis de montrer que des résultats satisfaisants étaient obtenus en définissant la rugosité à utiliser par une rugosité moyenne arithmétique Ra supérieure ou égale au quart de la longueur d'onde d'émission de l'émetteur 7. La rugosité à utiliser au moins sur les portions de surface interne de la chambre de mesure directement illuminées par l'émetteur 8 se situera avantageusement dans un intervalle compris entre le quart de la longueur d'onde d'émission et cinquante fois cette longueur d'onde d'émission. La rugosité à utiliser au moins sur les portions de surface interne de la chambre de mesure directement illuminées par l'émetteur 8 se situera de préférence dans un intervalle compris entre la moitié de la longueur d'onde d'émission et dix fois cette longueur d'onde d'émission.

A titre d'exemple, si la longueur d'onde utilisée est sensiblement égale à 450 nanomètres (lumière bleue), la rugosité moyenne arithmétique Ra sera choisie de préférence entre 0,22 micromètres et 4,5 micromètres. Pour une longueur d'onde sensiblement égale à 950 nanomètres (Infra-Rouge), la rugosité moyenne arithmétique Ra sera choisie de préférence entre 0,47 micromètres et 9,5 micromètres.

Une telle rugosité de surface peut être obtenue par tout procédé connu électrolytique, d'usinage, d'électroérosion, de grenaillage ou de sablage de la surface du moule servant ensuite à injecter une pièce, par exemple en matière plastique. On peut aussi utiliser une peinture mate de revêtement au moins sur les portions de surface concernées, peinture dont le « gloss » ou brillant spéculaire est faible, typiquement inférieur ou égal à 10%, de manière à produire une réflexion séculaire plus faible que la réflexion diffuse. On peut également ajouter un additif dans le plastique utilisé pour l'injection, de type minéral, fibre de verre, ou fibre végétales. Enfin, cette rugosité peut être obtenue par abrasion des portions de surface de la pièce en question après sa réalisation ou son injection, par exemple à l'aide de papier de verre avec un grain 180, ou par sablage avec des billes de verre.

Outre le fait de permettre de s'affranchir du problème de coloris, la rugosité de surface recherchée permet au détecteur d'être peu sensible voire insensible aux particules de poussières qui pourraient se déposer notamment sur la surface interne de la chambre de mesure. En effet, les grains de poussière sont généralement d'une taille de l'ordre de un à cent fois la longueur d'onde mais présentent un revêtement avec une rugosité similaire à celle de la surface interne de la chambre de mesure, ne modifiant ainsi quasiment pas le niveau de diffusion de la surface interne.

Par ailleurs, il n'est plus nécessaire de prévoir des barrières physiques compliquées, hormis le muret 54 qui reste nécessaire. Ce dernier peut néanmoins être porté directement sur la carte 4 de circuit imprimé, sous la forme d'un composant par exemple, de sorte que l'on économise dans ce cas la partie basse 50 de la chambre de mesure décrite en référence à la figure 1 des détecteurs connus.

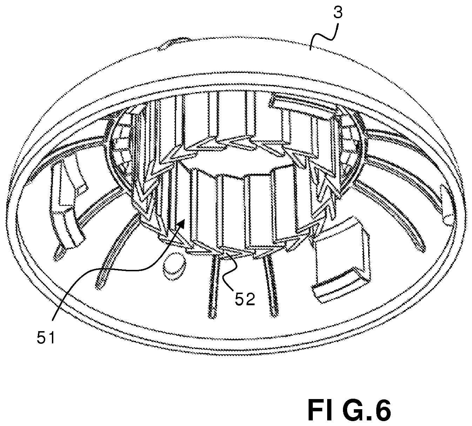

Une conséquence directe du fait de s'être affranchi du problème du choix de coloris pour la partie haute 51 de la chambre de mesure est qu'il est désormais possible de réaliser si on le souhaite cette partie haute 51 dans le même coloris que la coiffe 3 qui constitue la partie visible du détecteur, par exemple en blanc pour être assorti à la couleur d'un plafond auquel le détecteur sera fixé. La partie haute 51 de la chambre de mesure peut donc à présent venir de moulage avec la coiffe 3 en une seule pièce de couleur quelconque. La figure 6 représente un mode de réalisation d'une telle pièce obtenue par une seule opération de moulage.

L'invention permet donc, dans certaines de ces variantes, de réduire de façon conséquente le nombre de pièces à assembler par rapport au détecteur représenté schématiquement sur la figure 1. Il convient de noter à ce stade que même le dispositif 6 de filtrage montré sur la figure 1 pourrait être obtenu par procédé de surmoulage avec la pièce unique de la figure 6. Dans un mode de réalisation possible, la plaque 4 de circuit imprimé peut même faire office de platine pour le boîtier du détecteur.

Dans ce qui précède, l'utilisation d'une seule longueur d'onde d'émission a été décrite. Bien entendu, le principe de l'invention s'applique également aux modes de réalisation dans lesquels on utiliserait deux longueurs d'ondes d'émission distinctes de manière à pouvoir discriminer le type de particules de fumée, comme cela est décrit dans le document US 8, 907, 802. On peut ainsi prévoir que le volume de mesure comporte également un volume d'intersection entre un cône d'émission d'un rayonnement à une deuxième longueur d'onde d'émission distincte de la première longueur d'onde d'émission, et d'un cône de réception du rayonnement diffusé à cette deuxième longueur d'onde. Ce volume d'intersection pourra être le même que le volume d'intersection défini pour la première longueur d'onde (cas où un même émetteur et un même récepteur sont aptes à fonctionner selon les deux longueurs d'onde) ou bien légèrement décalé (cas où deux émetteurs et/ou deux récepteurs sont utilisés). Dans ces différents cas, la rugosité des portions de surface interne de la partie haute devra être conçue pour permettre la réflexion diffuse recherchée aux deux longueurs d'onde. Par exemple, si la première longueur d'onde est sensiblement égale à 450 nanomètres (lumière bleue) et que la deuxième longueur d'onde est sensiblement égale à 950 nanomètres (infra-rouge), la rugosité pourra être définie par une rugosité moyenne arithmétique Rₐ sensiblement égale à 0,8 micromètres.

En outre, bien que l'invention ait été décrite dans le cadre de composants optiques montés en surface d'une carte de circuit imprimé selon des cônes d'émission et de réception chacun perpendiculaire au plan de la carte, l'utilisation de portions de surface à rugosité suffisante conformément à l'invention n'est pas incompatible avec d'autres agencements dans lesquels l'émetteur et/ou le récepteur seraient montés avec un angle différent de 90° par rapport à la carte de circuit imprimé.

## Revendications

1. Détecteur optique de fumée à rayonnement diffusé comprenant un boîtier renfermant un volume (10) de mesure accessible aux particules de fumée dans une chambre de mesure comportant une partie haute (51), ledit volume (10) de mesure étant défini par un volume d'intersection entre un cône (C_{E}) d'émission d'au moins un premier émetteur (7) de rayonnement à une première longueur d'onde d'émission prédéfinie, et un cône (C_{R}) de réception d'un récepteur (8) de rayonnement apte à recevoir des rayonnements diffusés sur des particules de fumée, **caractérisé en ce que** ledit au moins un premier émetteur (7) de rayonnement et le récepteur (8) de rayonnement sont montés dans la chambre de mesure, en surface d'une plaque (4) de circuit imprimé placée sous la partie haute (51) **et en ce que** toute portion de surface interne de la partie haute (51) de la chambre de mesure faisant directement obstacle au rayonnement émis dans le cône (C_{E}) d'émission a une rugosité apte à générer une réflexion diffuse de ce rayonnement.

2. Détecteur optique de fumée à rayonnement diffusé selon la revendication 1, **caractérisé en ce que** ledit boîtier est formé par assemblage d'une platine (2) et d'une coiffe (3), **et en ce que** ladite partie haute (51) de la chambre de mesure est injectée en une seule pièce de couleur quelconque avec ladite coiffe (3).

3. Détecteur optique de fumée à rayonnement diffusé selon l'une quelconque des revendications précédentes, **caractérisé en ce que** ladite rugosité est définie par une rugosité moyenne arithmétique Rₐ supérieure ou égale au quart de ladite première longueur d'onde d'émission.

4. Détecteur optique de fumée à rayonnement diffusé selon la revendication 3, **caractérisé en ce que** ladite rugosité est définie par une rugosité moyenne arithmétique Rₐ inférieure ou égale à cinquante fois la première longueur d'onde d'émission.

5. Détecteur optique de fumée à rayonnement diffusé selon l'une quelconque des revendications 3 ou 4, **caractérisé en ce que** ladite rugosité est définie par une rugosité moyenne arithmétique Rₐ comprise entre la moitié et dix fois la première longueur d'onde d'émission.

6. Détecteur optique de fumée à rayonnement diffusé selon l'une quelconque des revendications précédentes, **caractérisé en ce que** la première longueur d'onde d'émission est sensiblement égale à 450 nanomètres.

7. Détecteur optique de fumée à rayonnement diffusé selon l'une quelconque des revendications précédentes, **caractérisé en ce que** le volume de mesure comporte en outre un volume d'intersection entre un cône d'émission d'un rayonnement à une deuxième longueur d'onde d'émission distincte de la première longueur d'onde d'émission, et d'un cône de réception du rayonnement diffusé sur des particules de fumée à cette deuxième longueur d'onde.

8. Détecteur optique de fumée à rayonnement diffusé selon la revendication 7, **caractérisé en ce que** la deuxième longueur d'onde d'émission est sensiblement égale à 950 nanomètres.

9. Détecteur optique de fumée à rayonnement diffusé selon une combinaison des revendications 6 et 8, **caractérisé en ce que** la rugosité de toute portion de surface interne de la partie haute (51) de la chambre de mesure faisant directement obstacle au rayonnement émis à la première longueur d'onde et/ou à la deuxième longueur d'onde est définie par une rugosité moyenne arithmétique Rₐ sensiblement égale à 0.8 micromètres.

10. Détecteur optique de fumée à rayonnement diffusé selon l'une quelconque des revendications précédentes, **caractérisé en ce que** ledit au moins un premier émetteur (7) de rayonnement et le récepteur (8) de rayonnement sont montés en surface de ladite plaque (4) de circuit imprimé de manière à ce que le cône (C_{E}) d'émission et le cône (C_{R}) de réception s'étendent selon deux directions d'orientation sensiblement parallèles, les deux directions d'orientation étant sensiblement orthogonales à la plaque (4) de circuit imprimé.

11. Détecteur optique de fumée à rayonnement diffusé selon la revendication 10, **caractérisé en ce que** le premier émetteur (7) de rayonnement et le récepteur (8) de rayonnement sont positionnés sur ladite carte (4) de circuit imprimé de sorte que lesdites deux directions d'orientation sensiblement parallèles soient séparées d'une distance d inférieure à 2,5 millimètres.

12. Détecteur optique de fumée à rayonnement diffusé selon la revendication 10, **caractérisé en ce que** la partie haute (51) de la chambre de mesure a une surface interne supérieure (55) séparée de la carte (4) de circuit imprimé d'une distance minimale H sensiblement égale à dix fois la distance d.

13. Détecteur optique de fumée à rayonnement diffusé selon les revendications 2 et 10, **caractérisé en ce que** la plaque (4) de circuit imprimé forme ladite platine.

## Patentansprüche

1. Optischer Rauchdetektor mit Streustrahlung, umfassend ein Gehäuse, das ein Messvolumen (10) einschließt, das für Rauchpartikel zugänglich ist, in einer Messkammer, umfassend einen oberen Teil (51), wobei das Messvolumen (10) von einem Schnittvolumen zwischen einem Kegel (C_{E}) zur Emission mindestens eines ersten Emittenten (7) von Strahlung mit einer ersten vordefinierten Emissionswellenlänge und einem Kegel (C_{R}) zum Empfangen eines Empfängers (8) von Strahlung definiert ist, der ausgelegt ist, um Strahlungen aufzunehmen, die auf Rauchpartikeln gestreut sind, **dadurch gekennzeichnet, dass** der mindestens eine Emittent (7) von Strahlung und der Empfänger (8) von Strahlung in der Messkammer montiert sind, auf der Fläche einer Leiterplatte (4), die unter dem oberen Teil (51) platziert ist, und dadurch, dass jeder Abschnitt der internen Fläche des oberen Teils (51) der Messkammer direkt ein Hindernis für die Strahlung, emittiert im Emissionskegel (CE) mit einer Rauigkeit darstellt, die ausgelegt ist, um eine gestreute Reflektion dieser Strahlung zu erzeugen.

2. Optischer Rauchdetektor mit Streustrahlung nach Anspruch 1, **dadurch gekennzeichnet, dass** das Gehäuse durch den Zusammenbau einer Platine (2) und einer Kappe (3) gebildet ist, und dadurch, dass der obere Teil (51) der Messkammer in einem einzigen Stück irgendeiner Farbe mit der Kappe (3) injiziert ist.

3. Optischer Rauchdetektor mit Streustrahlung nach einem der vorhergehenden Ansprüche, **dadurch gekennzeichnet, dass** die Rauheit durch eine mittlere arithmetische Rauheit IR von mehr als oder gleich einem Viertel der ersten Emissionswellenlänge definiert ist.

4. Optischer Rauchdetektor mit Streustrahlung nach Anspruch 3, **dadurch gekennzeichnet, dass** die Rauheit durch eine mittlere arithmetische Rauheit Rₐ von weniger als oder gleich fünfzig Mal der ersten Emissionswellenlänge definiert ist.

5. Optischer Rauchdetektor mit Streustrahlung nach einem der Ansprüche 3 oder 4, **dadurch gekennzeichnet, dass** die Rauheit durch eine mittlere arithmetische Rauheit Rₐ definiert ist, die zwischen der Hälfte und zehn Mal der ersten Emissionswellenlänge liegt.

6. Optischer Rauchdetektor mit Streustrahlung nach einem der vorhergehenden Ansprüche, **dadurch gekennzeichnet, dass** die erste Emissionswellenlänge im Wesentlichen gleich 450 Nanometer ist.

7. Optischer Rauchdetektor mit Streustrahlung nach einem der vorhergehenden Ansprüche, **dadurch gekennzeichnet, dass** das Messvolumen außerdem ein Schnittvolumen zwischen einem Kegel zur Emission einer Strahlung mit einer zweiten Emissionswellenlänge verschieden von der ersten Emissionswellenlänge und einem Kegel zum Empfang der Strahlung umfasst, die auf Rauchpartikel mit dieser zweiten Wellenlänge gestreut ist.

8. Optischer Rauchdetektor mit Streustrahlung nach Anspruch 7, **dadurch gekennzeichnet, dass** die zweite Emissionswellenlänge im Wesentlichen gleich 950 Nanometer ist.

9. Optischer Rauchdetektor mit Streustrahlung nach einer Kombination der Ansprüche 6 bis 8, **dadurch gekennzeichnet, dass** die Rauheit jedes Abschnitts der internen Fläche des oberen Teils (51) der Messkammer direkt ein Hindernis für die Strahlung, emittiert mit der ersten Emissionswellenlänge, ist, und/oder die zweite Emissionswellenlänge durch eine mittlere arithmetische Rauheit Rₐ definiert ist, die im Wesentlichen gleich 0,8 Mikrometer ist.

10. Optischer Rauchdetektor mit Streustrahlung nach einem der vorhergehenden Ansprüche, **dadurch gekennzeichnet, dass** der mindestens eine erste Emittent (7) von Strahlung und der Empfänger (8) von Strahlung auf der Fläche der Leiterplatte (4) montiert sind, so dass sich der Emissionskegel (C_{E}) und der Empfangskegel (C_{R}) gemäß zwei Richtungen mit im Wesentlichen paralleler Ausrichtung erstrecken, wobei die zwei Richtungen im Wesentlichen orthogonal zur Leiterplatte (4) sind.

11. Optischer Rauchdetektor mit Streustrahlung nach Anspruch 10, **dadurch gekennzeichnet, dass** der erste Emittent (7) von Strahlung und der Empfänger (8) von Strahlung auf der Leiterplatte (4) platziert sind, so dass die zwei im Wesentlichen parallelen Ausrichtungen um einen Abstand d von weniger als 2,5 Millimeter getrennt sind.

12. Optischer Rauchdetektor mit Streustrahlung nach Anspruch 10, **dadurch gekennzeichnet, dass** der obere Teil (51) der Messkammer eine obere innere Fläche (55) aufweist, die von der Leiterplatte (4) um einen minimalen Abstand H getrennt ist, der im Wesentlichen gleich zehn Mal der Abstand d ist.

13. Optischer Rauchdetektor mit Streustrahlung nach Anspruch 2 und 10, **dadurch gekennzeichnet, dass** die Leiterplatte (4) die Platine bildet.

## Claims

1. An optical smoke detector with scattered radiation, comprising a housing enclosing a measurement volume (10) that is accessible to the particles of smoke in a measurement chamber including an upper part (51), said measurement volume (10) being defined by a volume of intersection between an emission cone (C_{E}) of at least one first emitter (7) of radiation at a first predefined emission wavelength, and a reception cone (C_{R}) of a receiver (8) of radiation able to receive radiation scattered on smoke particles, **characterized in that** said at least one first emitter (7) of radiation and the receiver (8) of radiation are mounted in the measurement chamber, on the surface of a printed circuit board (4) placed below the upper part (51), **and in that** any inner surface portion of the upper part (51) of the measurement chamber directly forming an obstacle to the radiation emitted in the emission cone (C_{E}) has a roughness capable of generating a scattered reflection of this radiation.

2. The optical smoke detector with scattered radiation according to claim 1, **characterized in that** said housing is formed by assembling a plate (2) and a cap (3), **and in that** said upper part (51) of the measurement chamber is injected in a single piece of any color with said cap (3).

3. The optical smoke detector with scattered radiation according to any one of the preceding claims, **characterized in that** said roughness is defined by an arithmetic mean roughness Rₐ greater than or equal to a quarter of said first emission wavelength.

4. The optical smoke detector with scattered radiation according to claim 3, **characterized in that** said roughness is defined by an arithmetic mean roughness Rₐ less than or equal to fifty times the first emission wavelength.

5. The optical smoke detector with scattered radiation according to any one of claims 3 or 4, **characterized in that** said roughness is defined by an arithmetic mean roughness Rₐ of between half and ten times the first emission wavelength.

6. The optical smoke detector with scattered radiation according to any one of the preceding claims, **characterized in that** the first emission wavelength is substantially equal to 450 nanometers.

7. The optical smoke detector with scattered radiation according to any one of the preceding claims, **characterized in that** the measurement volume further includes a volume of intersection between an emission cone of a radiation at a second emission wavelength different from the first emission wavelength, and a reception cone of the radiation scattered on smoke particles at this second wavelength.

8. The optical smoke detector with scattered radiation according to claim 7, **characterized in that** the second emission wavelength is substantially equal to 950 nanometers.

9. The optical smoke detector with scattered radiation according to a combination of claims 6 and 8, **characterized in that** the roughness of any inner surface portion of the upper part (51) of the measurement chamber directly forming an obstacle to the radiation emitted at the first wavelength and/or at the second wavelength is defined by an arithmetic mean roughness Rₐ substantially equal to 0.8 micrometers.

10. The optical smoke detector with scattered radiation according to any one of the preceding claims, **characterized in that** said at least one emitter (7) of radiation and the receiver (8) of radiation are mounted on the surface of said printed circuit board (4) such that the emission cone (C_{E}) and the reception cone (C_{R}) extend in two substantially parallel directions of orientation, the two directions of orientation being substantially orthogonal to the printed circuit board (4).

11. The optical smoke detector with scattered radiation according to claim 10, **characterized in that** the first emitter (7) of radiation and the receiver (8) of radiation are positioned on said printed circuit board (4) such that said two substantially parallel directions of orientation are separated by a distance d of less than 2.5 millimeters.

12. The optical smoke detector with scattered radiation according to claim 10, **characterized in that** the upper part (51) of the measurement chamber has an upper inner surface (55) separated from the printed circuit board (4) by a minimum distance H substantially equal to ten times the distance d.

13. The optical smoke detector with scattered radiation according to claims 2 and 10, **characterized in that** the printed circuit board (4) forms said plate.
